# EUROPEAN PATENT APPLICATION

(11) **EP 1 462 699 A1**
(43) Date of publication of application: **29.09.2004**
(21) Application number: 03075560.7
(22) Date of filing: 25.02.2003
(51) Int. Cl.: F16L 3/233, F16L 3/137, H02G 3/30

(54) **Cable tie base and assembly of cable tie and cable tie base**

(71) Applicant: Gepe Development AG, 6304 Zug (CH)
(72) Inventor: Tack, Wilhelmus Petrus Maria, 5052 VJ Goirle (NL)
(74) Representative: Eveleens Maarse, Pieter

(57) **Abstract**

The invention relates to a lash device, such as a cable tie mounting base (1), in particular for receiving a synthetic self locking cable tie (2), comprising a plate (6), a plurality of legs (8), and a table (5), said plate having an upper surface and a lower surface, said table (5) having an upper surface and a lower surface, said table lower surface facing said upper surface of said plate or, alternatively a projection thereof, said legs (8) extending from the upper surface of said plate (6) to the table (5) and supporting said table (5) over said plate upper surface, such that at least one slot is defined in a space delimited by said table lower surface, said plate upper surface, and said legs (8), wherein structural means (9) are provided for causing a deformation effect of an inserted cable tie (2), such that said cable tie (2) adopts a largely curved posture.

## Description

The present invention relates to a lash device or cable tie base as defined in the preamble of claim 1.

Such devices are generally known in the art. One example is described by the US patent application US2002/0104931A1. When combined with a cable tie or strap known per se, that is when a cable tie is inserted into a more or less tunnel shaped cable tie passage or aperture provided therein, the device may be fixed to a structure relative to which longitudinal objects like bundles of cables are to be secured, for instance under the bonnet of a car. The device may, before or after inserting such a cable tie be fixed to such a structure by using adhesive or fixation elements such as bolts or nails. To this end, the device is provided with a fixating plate, which in this embodiment is the same plate that defines one side of the aperture or passage for receiving said cable tie. The lower side of the passage may like in the known device be closed by the plate, but it may equally be open as is the case in other prior art designs.

Such cable ties and cable tie bases are known for long. In the early day's they were designed either rather simply or rather complicated. The simple cable tie base designs as known from US patent 3.454.249, departed from a plate shape into which a so-called raceway for passing the cable tie was arranged. In a double plate design, an additional plate was adhered to such plate for shielding the opening or passage from adhesive material or glue, which could interfere with the passage of a cable tie through the cable tie opening.

A relatively expensive and sophisticated design is known from US patent document 3.632.071. This design is an essentially three-part cable tie base construction, comprising a mounting base, a pivotal securing means and a saddle. The saddle was structured with a passage opening directing to and away from said base, favourably making an inserted cable tie to curve, apparently to an amount that "the reception of an inserted cable tie is facilitated".

From US patent publication Des. 316,5111 a further development is known. From this document, by the use of improved synthetic moulding technology, a type of cable tie base is known, where on the one hand the single piece simplicity, and on the other hand a versatility of direction of insertion could be combined. These type of cable tie bases typically show a base plate part, an elevated central table part and legs for supporting the latter over the base plate. With this design a relatively strong and functionally attractive cable tie base could be produced in a relatively easy manner, with a possibility of inserting a cable tie from two distinctive directions, rather than from only one, or otherwise an infinite number of directions. For these reasons of versatility, strength and simplicity in design and production, this type of cable tie base has become very popular. Still, however, the use of it is not always conceived optimal, while given the advancements in technology, applications and working methods since the establishment of this principal design in the market, it has appeared to the applicant that it has become prone to further improvement.

With the latter mentioned type of cable tie base, the process of fixing the lash device to a structure, inserting the cable tie into the device, positioning one or a bundle of cables relative to device and inserted cable tie and locking said cable tie over said positioned bundle is in practice experienced as a time consuming and complicated procedure, especially when it is to be performed largely manually, as is required in many circumstances.

At an earlier stage applicant has already sought to alleviate this process by providing a new type of cable tie which significantly facilitates the closing a cable tie, especially when a cable bundle is being kept positioned relative to the device and inserted cable tie. This cable tie is known from International patent application publication nr WO 01/21500, and from Swedish patent Nr. 9903378-9, the contents of which are assumed to be incorporated herein by reference. This type of cable tie is at the one end provided with an aperture, which is partly open to the same end of the cable tie and it is provided at its opposing end with a narrowed part. Through these features the cable tie may be locked relatively easily in only one single action of picking up the end with the narrowed part, locating it over said partly opened opposite end and than pulling it for locking the cable tie.

As mentioned before, applicant however, has sought to further improve the use of the known cable ties and lash devices, since another problem related to the known devices is that of falling out of inserted cable ties. In many combinations of a cable tie and a lash device it appears to be necessary to maintain the relative position of lash device and inserted cable tie by hand, while positioning the cable or bundle and subsequently closing the cable tie. It may otherwise appear that the cable tie and device fall apart by sliding of the cable tie through the opening, or that the device moves relative to the cable tie which hampers quick fixation of the device, especially with plug based devices. This phenomenon may especially occur with batches of cable ties of a relatively modest thickness relative to the height of the device opening for inserting the cable tie , but may as well occur through natural and allowed variation in nominal thickness.

The aim of the invention is to provide a lash device which strongly reduces, if not eliminates the previous mentioned problem of falling out, thereby realising a major step in the development of lash devises and thereby of cable ties.

According to the invention such object is realised by the provision of the feature as defined in the characterising portion of claim 1.

With the measures of claim 1 adopted to a plate based lash device, it has, with the lifted table type of cable tie base become possible to insert a cable tie and release it while working without a chance of the cable tie falling out.

Also it has now become possible to pre-assemble lash device and cable tie , which considerably enhances and economises the use of cable ties during bundling and mounting cables.

The invention therefore also relates to a set of lash device and cable tie, in particular a pre-assembled set of such a device and a cable tie. Especially when combined with the pre-mentioned novel, easy closing type of cable tie it has become feasible and easy to mount pre-assembled sets of device and cable tie and to subsequently secure the desired object, e.g. the mentioned bundle of cables, while having both hands entirely free for accomplishing the closing of the cable tie. This circumstance considerably decreases the required bundling effort. The latter is even more the case as the pre-assembly of device and cable tie may be performed automatically.

With a structure according to the invention, a cable tie to be inserted in an opening of the device passes a depressed part of the hole or passage during the trajectory of insertion in the device. By this effectively curved trajectory of the hole, the cable tie is forced into a bend position. The force to be brought up for bending the cable tie during insertion is relatively modest for a man or a machine inserting the cable tie, however causes an elastic resistance force within the cable tie, which creates a considerable force in friction of the cable tie with the sides defining the hole. Given the modest weight of the cable tie, the created internal tension of the cable tie lets it retain its inserted position in to the device, thus causing it to be feasible for use as a pre-assembled unit, i.e. without a risk of falling apart of cable tie and device.

The inner, i.e. cable tie facing side of a depressed wall is produced at least partly spherical. Preferably also the outer facing side of the same wall is at least largely correspondingly spherical, e.g. by the local use of a ball part during moulding the device. The inner spherical shape causes a cable tie to follow an either down or upward curved way relative to the entrance opening, irrespective of which of the four possible openings is used for entry.

The invention comprises additionally features for enhancing the insertion of the cable tie in a further effort to enhance the usefullness of the device.

One such further measure is the creation of a sloping cable tie passage part leading to the opening of the insertion hole. The slope starts at a considerable distance from the opening, i.e. at a distance at least corresponding to half the length of a supporting leg for an upper structure part for forming said passage. This feature provides both a feeling for an inserting person and a guidance for the cable tie towards the opening of the passage. Especially but not necessarily the combination with said earlier mentioned spherical inner wall face of the table provides in optimal guidance and bending of the inserted cable tie.

The invention therefore also relates to a plate based lash device having the described feature of said sloping cable tie passage part. When the sloping part, in accordance with a further development of this feature, is designed to go down to at least virtually the lower side of the plate in which the slope is created, the wall part opposite to, i.e. below the table part may be obviated, thus saving material. By letting the slope go down to said lower side, use may be made of the surface of the structure onto which the device is to be fixed, for supporting or guiding an inserted cable tie. Moreover, the sharp edge of the slope end at the exit opening allows for easy passage of a cable tie that is being inserted.

Another feature according to the invention which optimises the process of inserting a cable tie is the positioning and orientation of the supporting legs. In a device according to the present invention, the supporting legs like in the known devices are positioned near an entry or exit opening, which in practice means in a corner of the tunnel structure, however, the legs are each divided in two, each of which two are oriented virtually but not entirely in line with the required direction of insertion. Each leg, when taken between beginning and end thereof is oriented under an angle smaller than 30°, preferably smaller than 20° with the insertion direction. Supporting legs designed and oriented such providing for both an easy catch of the cable tie end to be inserted, and guidance if not a strongly improved guidance thereof. In this design account is taken of the fact that commonly the end of a cable tie is narrowed by pointed or rounded shape. Especially when combined with the earlier mentioned sloping feature, the current design provides in optimised guidance at inserting a cable tie thereby enhancing the use thereof. However, the feature may also be included separately, for which reason the invention also separately relates to a lash device provided with the described feature of guiding supporting legs.

In an even further development of this feature, the legs are shaped slightly curved as taken in top view, i.e. at least at the mutually facing sides thereof, thus combining a further enhancement of ease of insertion with a leg and device rigidity enforcing effect. When offered as an integrated set of cable tie and cable tie base, the design ensures that the bend of the cable tie will be less than 30° thereby reducing space requirements during transport and packing.

The invention will now by way of example be elucidated further along a drawing in which:
Figure 1 is a schematic representation of a prior art cable tie inserted in a cable tie base or lash device;
Figure 2 is a schematic view in side elevation of a cable tie base according to the invention with a cable tie inserted;
Figure 3 in perspective view represents a plate based cable tie base according to the invention;
Figure 4 combines a top view with a side elevation of the embodiment according to figure 3, and
Figure 5 combines a perspective view of the top side of said embodiment with a perspective bottom side view of the second embodiment;
In the figures identical reference numbers relate to corresponding technical features.

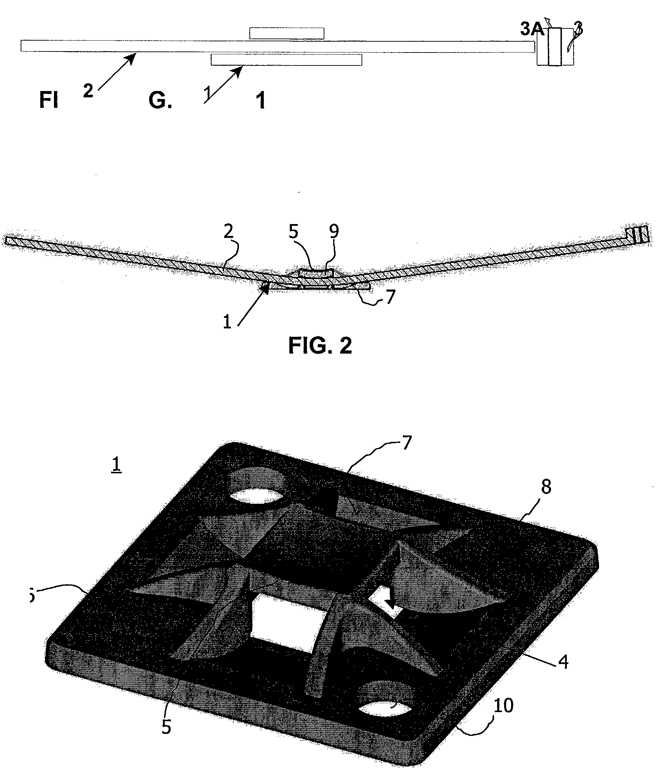

Figure 1 schematically illustrates a cable tie 2 inserted into a cable tie base or lash device 1. Both elements are usually produced in a synthetic material, normally by moulding. A cable tie 2 generally comes as a straight lash, which is rectangular in cross section and which at one longitudinal end is provided with a head part 3, in which an aperture 3A, alternatively denoted raceway, passage or tunnel is provided for looping the cable tie 2 by inserting other end of the cable tie. The aperture 3 of prior art devices is suited for inserting a cable tie 2, i.e. is provided with an opening sufficiently large in cross section for the cable tie 2 to pass through. The cable tie 2 thereby maintains its straight aligned position as indicated.

The cable tie base has a central section 5, the so called table or table part 5, which is positioned raised relative to a base plate 6, and which below said table section is provided with an open part of conforming shape and measures. The table 5 is supported by legs 8 known per se which are not depicted in the current drawing. Both the table and the base plate are shaped generally rectangular. At least the legs 8 for supporting the table 5 over the base plate 6 are positioned in a generally rectangular shape, at least generally in corner parts of the generally rectangular shaped table 5.

The lower side of table 5 facing the base plate 6 and the upper side of the base plate 6 facing the table 5, at least the projected central part thereof, together form a tunnel 4 or passage for a cable tie to be inserted. Said legs 8 delimit the entrances of a passage 4. The lower face of the table 5 forms a wall side of the passage, whereas the entrances or slots of the passage in fact form open walls of the passage 4.

Figure 2 is a sectional view according to figure 1 of a new lash device 1 according to the invention. It is provided with a table 5 positioned relatively low relative to the base plate 6, and with long slopes 7 within said base plate 6, extending from the top side i.e. table facing side thereof to at least virtually all the way down to the bottom side of the base plate 6.

Further, the lower side of the table 5 has a convex shape as seen in cross section of a runway, so that a cable tie 2 which is being inserted, will be gradually guided downwards. So as to realize said convexity in both directions of insertion that are possible at this kind of cable tie bases, the bottom face of the table 5 is provided with a ball shape 9. It is noted that in figure 2 a head part 3 of cable tie 2 is omitted for reasons of simplicity, and to illustrate that a cable tie may be inserted from either side of a passage 4.

The cable tie passage 4 is shaped symmetrically relative to a virtual plane perpendicular to the base plate, so that depending on the thickness of the cable tie 2, the inserted cable tie 2 may at the other end of the passage 4 be picked up by the lowermost side of the opposite side slope 7. By the feature of gradually lowering slopes it is realised that a cable tie to be inserted is guided towards the entrance of a passage. Also, particularly in combination with a table part 5 of which the bottom side is located relatively low over the upper face of the base plate 6, certainly in relation to an average thickness of commonly applied cable ties 2, an inserted cable tie, when fully pushed through said passage 4, is urged into a modest bend as is depicted in this figure 2. This feature reassures that an inserted cable tie and the relevant cable tie base will not fall apart, which is favourable during the process of fixing cables, or at after pre-assembly of the two. The feature of a convex lower side of the table part 5 supports both an easy insertion of a cable tie and the proper maintenance of the slightly bended position of an inserted cable tie. Typically the distance as taken perpendicular to the upper face of a base plate 6 and the lowest part of a table 5 is smaller than the thickness of a cable tie 2 provided e.g. as or in a set with this cable tie base 1. In particular embodiments according to this principal design of the cable tie base 1 according to the invention, the distance is smaller that the thickness of the base plate, more in particular smaller than half the thickness of a base plate 6.

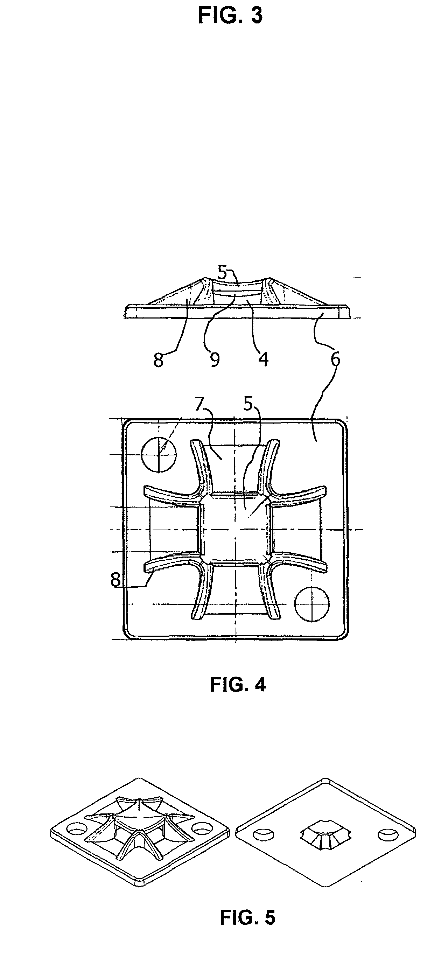

Figure 3 illustrates that a slope 7 typically starts at a distance about half way the distance between the relevant edge the base plate 6 and the entry of a passage 4, i.e. at the beginning of the table section, all as taken in the direction of insertion.

Figure 4 illustrates that such beginning of a slope 7 may almost equal the length of said table part in the relevant direction. Typically the beginning a slope 7 also starts at a distance away from the entry of more than half the length of a leg 8, but may, as is depicted in figure 4 also start at the beginning of a leg 8. As is clear from this figure, in the cable tie base according to the invention, a leg 8 typically comes in a two-part form. Alternatively denoted they come in pairs. Each of a pair forms a V-shape with the other. This feature further aids in directing a cable tie 2 to be inserted, in that each part of a leg 8 is situated at least substantially aligned with the direction of insertion. Each part of a leg extends over more than half the distance between a base plate edge and the entry of a passage 4 as taken in the direction of insertion.

Preferably the legs line up vertically with the sloping part 7, and also preferably they are shaped slightly curved as may best be seen in the top view of figure 4. The latter feature increases the receptive and guiding capacity of the provided set of slope 7 and bordering walls of the legs 8. An Additional advantage of the two-part feature of a leg is that it provides a relatively large rigidity to the base plate 6 so that it may be produced relatively slim without losing strength. Together with the feature of a lowered table 5 and therewith is bottom face, as described along figure 2, the height of the legs 8 may be kept relatively modest. This in turn increases the rigidity of the present design. Apart from the lowered volume as effected by the modest height of the table and by the relative modest thickness of the base plate, which is favourable at transport of such cable tie bases, the present design also enables a saving on material and costs for the cable tie base 1. As may especially from the top view in figure 4 be noted, the two part leg shape also enlarges the connection base between the table 5 and a leg 8. The invention further takes advantage of the two part feature by locating an aperture in a corner of the plate 6, in between the parts of a leg 8, without interrupting the same and with full freedom of locating a screw head in this area.

Figure 4 in a plan view shows a slightly modified embodiment of the base plate in which the length of the slope 7 is enlarged to almost that of the legs. The range in which the slope 7 may start, lies in accordance with the invention around the beginning of a leg 8 and about half way the distance between the distance between the edge of the base plate and the entrance of the passage 4, defined by the edge of the table 5. It is noted that with the two part shape of a leg, and with its relatively modest height, it is not required to have the length of it to extend up to said outer edge of the base plate. Typically the length of a leg part may be up to about two thirds of the distance between entrance of passage 4 and the outer edge of the base plate.

Figure 5 in a perspective view of the cable tie base 1, illustrates that the central part of the base plate 1 is, in accordance with a preferred shape, open. As it were this central section is lifted and supported by the legs 8. With said lower side of the passage 4 kept open, the cable tie base may, while maintaining all of foresaid advantages favourably at once be produced as a single moulding piece.

The invention thus also relates to a lash device, such as a cable tie mounting base, in particular for receiving a synthetic self locking cable tie, comprising a plate, a plurality of legs, and a table, said plate having an upper surface and a lower surface, said table having an upper surface and a lower surface, said table lower surface facing said upper surface of said plate or, alternatively a projection thereof, said legs extending from the upper surface of said plate to the table and supporting said table over said plate upper surface, such that at least one slot is defined in a space delimited by said table lower surface, said plate upper surface, and said legs, wherein structural means are provided for causing a deformation effect of an inserted cable tie, such that said cable tie adopts a largely curved posture.

## Claims

1. Lash device (1), adapted for receiving a cable tie (2), comprising a plate (6), a plurality of legs (8), and a table (5), said plate (6) having an upper surface and a lower surface, said table (5) having an upper surface and a lower surface, wherein the lower surface of said table faces the upper surface of said plate (6), said legs (8) extending from the upper surface of said plate (6) to the table (5) and supporting said table (5) over the upper surface of said plate, such that at least one slot is defined in a space delimited by said table lower surface the upper surface of said plate and said legs (8), **characterized in that** structural means are provided both to said table lower face and to said plate upper face such that said cable tie (2), received in said lash device adopts a substantially curved position.

2. Device as claimed in claim 1, **characterized by** a sloping entry part (7) within said plate (6) and a spherical shape (9) of said table lower face.

3. Device as claimed in claim 1 or 2, **characterized in that** the height of said slot opening as taken perpendicular from said plate (6) upper surface to said table (5) lower surface is smaller than the thickness of a cable tie to be inserted, and in which the plate (6) is provided with a depressed slope (7), forming an entry towards said slot.

4. Device as claimed in claim 1, 2 or 3, **characterized in that** the sloping part (7) has an overall angle of slope as taken in side elevation of less than 45° with the lower face of the base plate (6), and is preferably slightly curved, preferably concave when approached from above.

5. Device as claimed in any of the preceding claims, **characterized in that** the height of the sloping part (7) at least virtually extends over the entire thickness of the base plate (6) and that the length of the sloping part as taken in the direction of insertion of a cable tie (2) extends over at least half of the same extension of a leg (8).

6. Device as claimed in any of the preceding claims, **characterized in that** the legs (8) at each corner of the passage (4) as seen in top view, are produced in pairs, of which pairs each one leg is oriented substantially but not entirely in line with the required direction of insertion.

7. Device as claimed in any of the preceding claims, **characterized in that** each leg of a pair (8), when taken between the beginning and end thereof is oriented under an angle smaller than 30°, preferably smaller than 20° with the direction of insertion of an opening to which the leg extends.

8. Device as claimed in claim 6 or 7, **characterized in that** a bore (10) in a base plate (6) is located in the space between the two parts of a leg (8) or the projection thereof.

9. Device as claimed in any of the preceding claims, **characterized in that** the legs (8) extend over about two thirds of the distance between passage (4) and edge of the base plate (6) as taken in the direction of insertion.

10. Device as claimed in any of the preceding claims, **characterized in that** the upper face of the table (5) is at least partly downwardly depressed spherical shaped, preferably corresponding to the bottom face of said table (5).

11. Set of an integrated cable tie and a lash device in which the cable tie is inserted into the device, and wherein the lash device (1) conforms to any of the preceding claims.

12. Set as claimed in claim 11, **characterized in that** an inserted cable tie extends under an angle of less than 30° with the plane of the base plate (6).
